# EUROPEAN PATENT APPLICATION

(11) **EP 4 782 307 A1**
(43) Date of publication of application: **29.07.2026**
(21) Application number: 23953125.4
(22) Date of filing: 22.09.2023
(51) Int. Cl.: B62D 5/04, B62D 3/02

(54) **ELECTRIC POWER STEERING DEVICE**

(71) Applicant: JTEKT CORPORATION, Kariya-shi, Aichi 448-8652 (JP)
(72) Inventor: CHISAKI, Rintaro, Kariya-shi, Aichi 448-8652 (JP); YAMASHITA, Shuhei, Kariya-shi, Aichi 448-8652 (JP)
(74) Representative: Winter, Brandl - Partnerschaft mbB
(86) International application number: PCT/JP2023/034567
(87) International publication number: WO 2025/062649

(57) **Abstract**

An electric power steering system (20) includes a motor (22B), a reducer (22C), and a steering gearbox (22A). The steering gearbox includes an input shaft (61) and a first housing (41). The reducer includes first to fourth gears (51 to 54), a second housing (42), and a third housing (43). The first gear is linked to a motor shaft (22B1) and rotates around a first axis (O1), the second gear and the third gear are linked coaxially and rotate around a second axis (O2), and the fourth gear is linked to an end portion of the input shaft in an axial direction and rotates about a third axis (O3). Relative positions of the first axis (O1) and the third axis (O3) are defined by attaching the motor (22B) and the first housing (41) to the second housing (42) from a same attaching direction in the axial direction of the input shaft.

## Description

### TECHNICAL FIELD

The present disclosure relates to an electric power steering system.

### BACKGROUND ART

An electric power steering system disclosed in Patent Document 1, for example, includes a motor and an RBS type (recirculating ball screw type) steering gearbox. The steering gearbox converts a rotational motion of a steering shaft into a swinging motion of a pitman arm. The direction of steered wheels is changed in conjunction with the pitman arm. Torque of the motor is transmitted to a ball screw shaft of the steering gearbox via a reducer. Thus, steering by a steering wheel is assisted.

The reducer is a two-stage gear reducer. The reducer includes a first gearset and a second gearset. The first gearset is a combination of a pinion provided on an output shaft of the motor and an intermediate gear. The second gearset is a combination of a pinion provided on the intermediate gear and a helical gear linked to the ball screw shaft. The intermediate gear and the pinion of the intermediate gear are rotatably supported inside the same housing via two bearings.

### Related Art Documents

### Patent Documents

Patent Document 1: US 2022/0135118 A

### SUMMARY OF THE INVENTION

### Problem to be Solved by the Invention

An electric power steering system is required to operate smoothly.

### Means for Solving the Problem

An electric power steering system according to one aspect of the present disclosure includes a motor including a motor shaft, and a reducer that is configured to reduce speed of rotation of the motor, and a steering gearbox that includes an input shaft to which rotation is applied from the reducer and an output shaft that is configured to operate in conjunction with steered wheels of a vehicle, the steering gearbox being configured to convert rotation of the input shaft into rotation of the output shaft. The steering gearbox includes a first housing that extends in an axial direction of the input shaft and that accommodates at least a portion of the input shaft. The reducer includes a first parallel-axis cylindrical gear pair that includes a first gear and a second gear that mesh with each other, a second parallel-axis cylindrical gear pair that includes a third gear and a fourth gear that mesh with each other, a second housing that is linked to an end portion of the first housing in an axial direction, and that accommodates at least the fourth gear from between the second parallel-axis cylindrical gear pair, and a third housing that is linked to the second housing on an opposite side from the first housing in the axial direction of the input shaft, and that is configured to cover the first parallel-axis cylindrical gear pair. The first gear is linked to the motor shaft, and is configured to rotate about a first axis. The second gear and the third gear are coaxially linked, and are configured to rotate about a second axis. The fourth gear is linked to an end portion of the input shaft in the axial direction, and is configured to rotate about a third axis. Relative positions of the first axis and the third axis are configured to be defined by attaching the motor and the first housing to the second housing from a same attaching direction in the axial direction of the input shaft.

### BRIEF DESCRIPTION OF THE DRAWINGS

[FIG. 1] FIG. 1 is a schematic diagram of an electric power steering system according to a first embodiment.
[FIG. 2] FIG. 2 is a perspective view of a steering actuator in FIG. 1.
[FIG. 3] FIG. 3 is a perspective view illustrating a principal portion of the steering actuator in FIG. 2.
[FIG. 4] FIG. 4 is a perspective view of the steering actuator of FIG. 2 as viewed from a third housing side.
[FIG. 5] FIG. 5 is a perspective view illustrating an inside structure of the steering actuator in FIG. 2.
[FIG. 6] FIG. 6 is an exploded perspective view of the steering actuator in FIG. 2.
[FIG. 7] FIG. 7 is a perspective view illustrating a principal portion of a steering gearbox in FIG. 2.
[FIG. 8] FIG. 8 is a schematic diagram of the steering actuator in FIG. 2.
[FIG. 9] FIG. 9 is a sectional view of the steering actuator in FIG. 2, taken along an axial direction.
[FIG. 10] FIG. 10 is a sectional view of the steering actuator according to a second embodiment, taken along the axial direction.
[FIG. 11] FIG. 11 is a sectional view illustrating a principal portion of the steering actuator in FIG. 10.
[FIG. 12] FIG. 12 is a front view of a fourth gear in FIG. 10 as viewed from the axial direction.

### MODES FOR CARRYING OUT THE INVENTION

### <First Embodiment>

An electric power steering system according to a first embodiment will be described.

### <Overall Configuration>

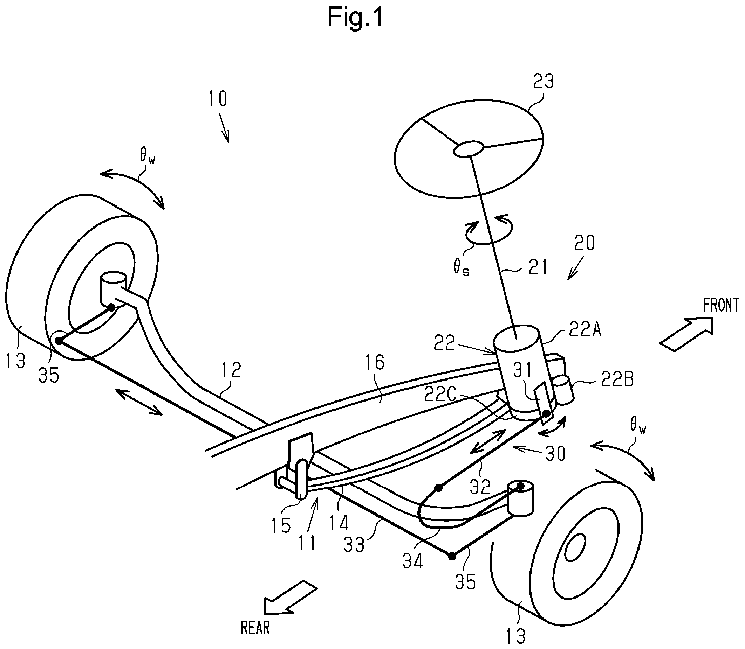

As illustrated in FIG. 1, an electric power steering system 20 is installed in a vehicle 10 that is a cab-over-engine type vehicle, for example. The vehicle 10 includes a suspension 11 that is a rigid axle suspension. The suspension 11 supports a front axle 12. Steered wheels 13 that are front wheels are linked to both ends of the front axle 12. The suspension 11 includes a leaf spring 14. As an example, the leaf spring 14 is situated above the front axle 12. The leaf spring 14 extends in a front-rear direction of the vehicle. Both ends of the leaf spring 14 are attached to a vehicle body frame 16 via a support member 15 such as a shackle.

The electric power steering system 20 includes a steering actuator 22 provided on a steering shaft 21. The steering actuator 22 includes a steering gearbox 22A, a motor 22B, and a reducer 22C. A first end portion of the steering shaft 21 is linked to the steering wheel 23. A second end portion of the steering shaft 21 is linked to a steering gearbox 22A. The motor 22B is linked to the steering gearbox 22A via the reducer 22C. The steering gearbox 22A is of an RBS type (recirculating ball screw type).

The steering gearbox 22A is linked to the steered wheels 13 via a link mechanism 30. The link mechanism 30 includes a pitman arm 31, a drag link 32, and a tie rod 33. A base end of the pitman arm 31 is linked to a side portion of the steering gearbox 22A. The pitman arm 31 is swingable about the base end thereof, in the front-rear direction of the vehicle. A first end portion of the drag link 32 is rotatably linked to a distal end of the pitman arm 31. A second end portion of the drag link 32 is rotatably linked to a knuckle arm 34 of the right steered wheel 13. Both ends of the tie rod 33 are linked to the right and left steered wheels 13 via tie rod arms 35.

Rotation of the steering wheel 23 is transmitted to the steering gearbox 22A via the steering shaft 21. The steering gearbox 22A converts rotational motion of the steering shaft 21 into swinging motion of the pitman arm 31. The swinging motion of the pitman arm 31 drives the drag link 32 in the front-rear direction of the vehicle. The knuckle arm 34 swings in conjunction with the drag link 32, thereby steering the steered wheels 13.

The motor 22B operates to apply torque to the steering shaft 21 in the same direction as a steering direction of the steering wheel 23. The torque of the motor 22B is transmitted to the steering shaft 21 via the reducer 22C and the steering gearbox 22A. Thus, steering by the steering wheel 23 is assisted.

### <Configuration of Steering Actuator 22>

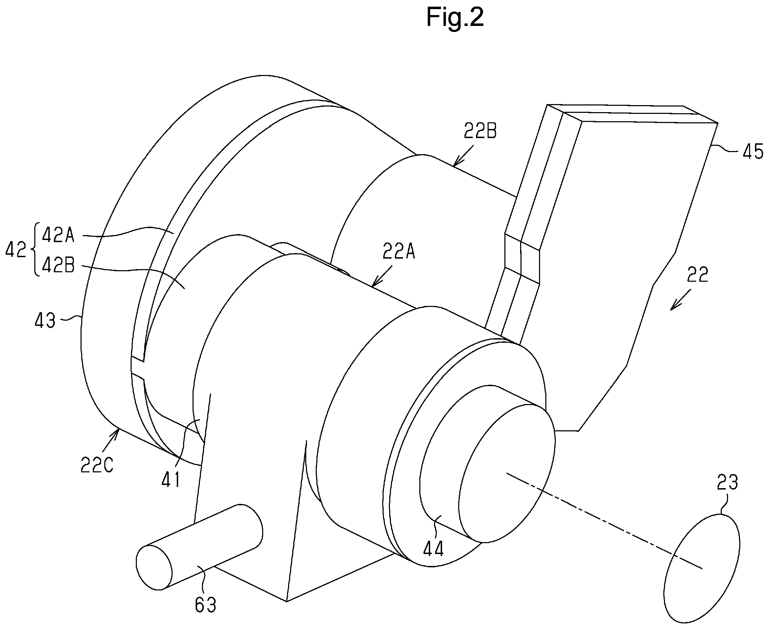

Next, a configuration of the steering actuator 22 will be described in detail. As illustrated in FIG. 2, the steering gearbox 22A includes a first housing 41. The first housing 41 includes a tubular portion with a circular cross-sectional form. A torque sensor 44 is provided at a first end portion of the first housing 41. The torque sensor 44 detects torque applied to the steering shaft 21. The first end portion of the first housing 41 rotatably supports the steering shaft 21 via the torque sensor 44. A third housing 43 is attached to a second end portion of the first housing 41 via a second housing 42.

The reducer 22C includes the second housing 42. The second housing 42 includes a base portion 42A and a fitting portion 42B. The base portion 42A is a plate-shaped portion of the second housing 42 that extends in a direction orthogonal to an axial direction of the first housing 41. A portion of the base portion 42A protrudes outward in a radial direction from the first housing 41.

The base portion 42A includes a first end face and a second end face. The first end face is an end face on a side closer to the first housing 41 in the axial direction of the first housing 41. The second end face is an end face on the opposite side from the first end face, and is an end face that is on a side farther from the first housing 41 in the axial direction of the first housing 41.

A first end portion of the motor 22B is attached to a portion of the base portion 42A that projects outward in the radial direction from the first housing 41. The first end portion is an end portion of the motor 22B from which a motor shaft (omitted from illustration), which is an output shaft of the motor 22B, protrudes. The motor 22B is attached from the first end face side of the base portion 42A. A control device 45 is attached to a second end portion of the motor 22B. The control device 45 controls driving of the motor 22B.

The fitting portion 42B is provided on the first end face of the base portion 42A. The fitting portion 42B is a tubular body with a circular cross-sectional form. An outer peripheral face of the second end portion of the first housing 41 is fitted to an inner peripheral face of the fitting portion 42B. The first housing 41 is fixed to the second housing 42 by bolts (omitted from illustration) via attaching portions (omitted from illustration) provided on the outer peripheral face of the second end portion. The axis of the first housing 41 is parallel to the axis of the motor 22B.

The reducer 22C includes the third housing 43. The third housing 43 is attached to the base portion 42A. The third housing 43 is a box-shaped body that covers the second end face of the base portion 42A. A profile of the third housing 43 corresponds to a profile of the base portion 42A.

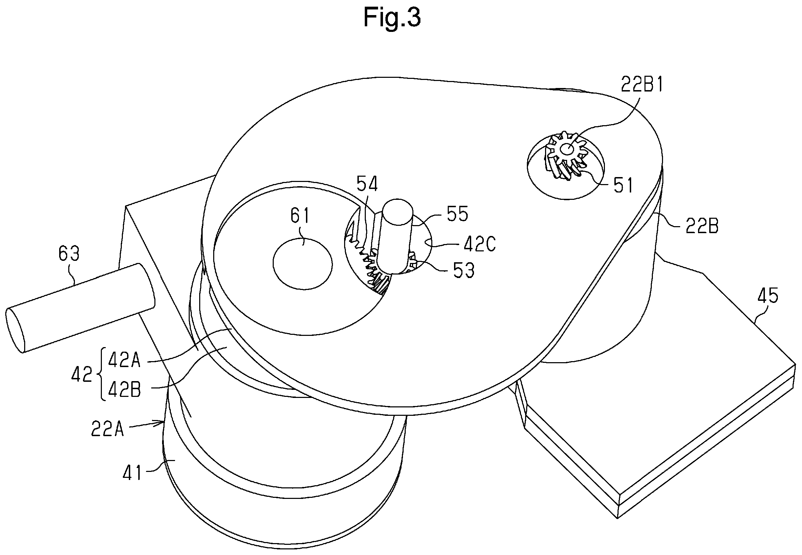

As illustrated in FIG. 3, the motor shaft 22B1 passes through the base portion 42A in a contactless state. A first gear 51 is linked to a distal end of the motor shaft 22B1 so as to be integrally rotatable therewith. The first gear 51 is, for example, a helical gear.

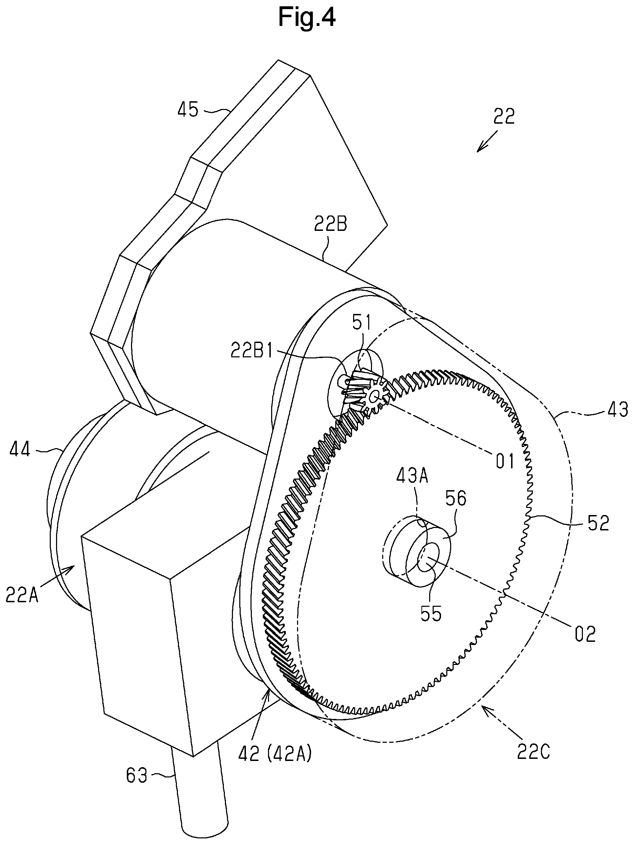

As illustrated in FIG. 4, the first gear 51 is accommodated inside the third housing 43 in a contactless state. The first gear 51 rotates about a first axis O1 as the motor 22B is driven. The first axis O1 agrees with the axis of the motor shaft 22B1.

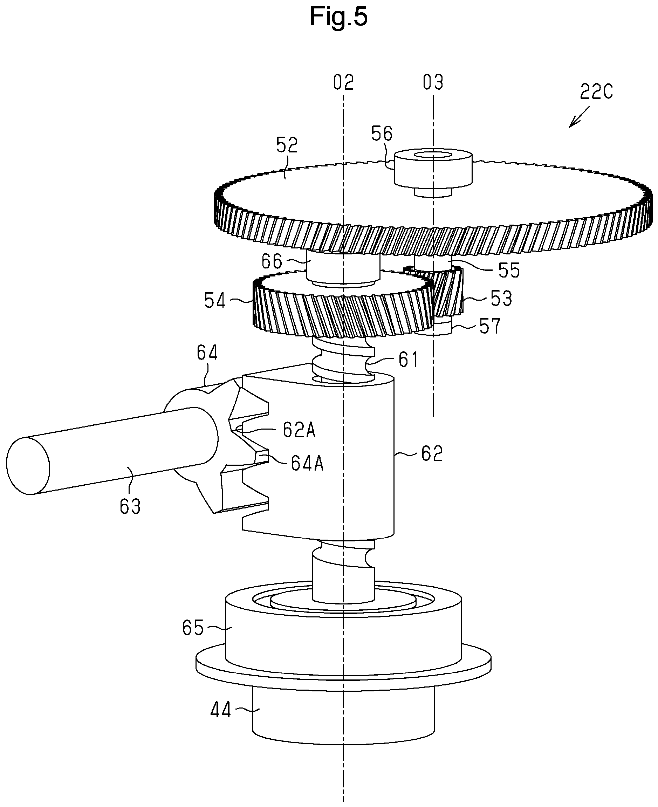

As illustrated in FIG. 5, the reducer 22C includes a second gear 52, a third gear 53, a fourth gear 54, and a shaft 55, in addition to the second housing 42 and the third housing 43. The second gear 52, the third gear 53, and the fourth gear 54 are, for example, helical gears. The second gear 52 and the third gear 53 are linked to the shaft 55 so as to be rotatable integrally. The second gear 52 is disposed towards a first end portion of the shaft 55. The third gear 53 is disposed towards a second end portion of the shaft 55. A first bearing 56 is mounted on the first end portion of the shaft 55. A second bearing 57 is mounted on the second end portion of the shaft 55. The second gear 52 is situated further inward in the axial direction of the shaft 55 from the first bearing 56. The third gear 53 is situated further inward in the axial direction of the shaft 55 from the second bearing 57. The second gear 52, the shaft 55, and the third gear 53 are situated coaxially. The second gear 52, the shaft 55, and the third gear 53 are rotatable about a second axis O2. The fourth gear 54 will be described later.

Note that the outside diameters of the first to fourth gears 51 to 54 are set so as to increase in the order of the first gear 51, the third gear 53, the fourth gear 54, and the second gear 52. That is to say, the first gear 51 has the smallest outside diameter, and the second gear 52 has the largest outside diameter.

As illustrated in FIG. 3, the second housing 42 includes a shaft insertion hole 42C. The shaft insertion hole 42C is a recessed portion of the second housing 42 including an arcuate face extending in the axial direction of the fitting portion 42B. Inside of the shaft insertion hole 42C communicates with the inside of the fitting portion 22B. The shaft insertion hole 42C passes through the second housing 43 in the axial direction of the fitting portion 42B. The shaft 55 is inserted into the shaft insertion hole 42C. The third gear 53 is disposed in a contactless state inside the shaft insertion hole 42C. That is to say, the third gear 53 is accommodated inside the second housing 42.

As illustrated in FIG. 4, a first bearing support portion 43A is provided on an inner face of an end wall of the third housing 43. The first bearing support portion 43A is a tubular body having a circular cross-sectional form. An outer peripheral face of the first bearing 56 is fitted into an inner peripheral face of the first bearing support portion 43A. That is to say, a first end portion of the shaft 55 is rotatably supported by the third housing 43 via the first bearing 56. The second gear 52 is accommodated inside the third housing 43 in a contactless state. The second gear 52 meshes with the first gear 51. The first gear 51 and the second gear 52 make up a first parallel-axis cylindrical gear pair.

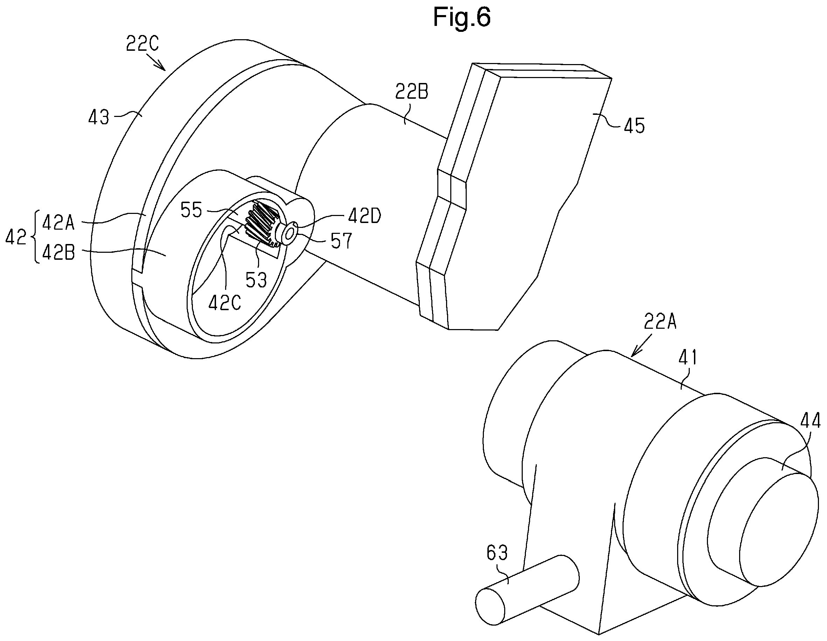

As illustrated in FIG. 6, the second housing 42 includes a second bearing support portion 42D. The second bearing support portion 42D is a part of the shaft insertion hole 42C. The second bearing support portion 42D is coaxial with the shaft insertion hole 42C and is provided toward a distal end of the fitting portion 42B. The second bearing support portion 42D is a recessed portion of the second housing 42 including an arcuate face extending in the axial direction of the fitting portion 42B. The second bearing support member 42D has a smaller diameter than the shaft insertion hole 42C and communicates with the shaft insertion hole 42C. An outer peripheral face of the second bearing 57 is fitted into an inner peripheral face of the second bearing support portion 42D. That is to say, the second end portion of the shaft 55 is rotatably supported by the second housing 42 via the second bearing 57.

As illustrated in FIG. 5, the steering gearbox 22A includes, in addition to the first housing 41, a ball screw shaft 61, a ball screw nut 62, a sector shaft 63, and a sector gear 64. The ball screw shaft 61, the ball screw nut 62, the sector shaft 63, and the sector gear 64 are accommodated inside the first housing 41.

The ball screw shaft 61 is rotatably supported relative to the first housing 41, via a third bearing 65 and a fourth bearing 66. The third bearing 65 is provided at a first end portion of the ball screw shaft 61. The fourth bearing 66 is provided at a second end portion of the ball screw shaft 61. The first end portion of the ball screw shaft 61 is linked to the steering shaft 21 via the torque sensor 44. The second end portion of the ball screw shaft 61 passes through the first housing 41 in the axial direction, and is exposed to the outside (see FIG. 3).

The ball screw nut 62 is screwed onto the ball screw shaft 61 via a plurality of balls that can be circulated (omitted from illustration). The ball screw nut 62 includes a plurality of rack teeth 62A. The rack teeth 62A are arrayed on an outer peripheral face of the ball screw nut 62 in the axial direction of the ball screw nut 62.

The sector shaft 63 extends in a direction orthogonal to the axis of the ball screw nut 62. The sector shaft 63 is rotatably supported relative to the first housing 41, via a bearing that is omitted from illustration. The sector shaft 63 includes an outer end portion. The outer end portion is an end portion of the sector shaft 63 that passes through the first housing 41 and protrudes to the outside. The base end of the pitman arm 31 (see FIG. 1) is fixed to the outer end portion of the sector shaft 63.

The sector gear 64 is provided to the sector shaft 63 so as to be integrally rotatable. The sector gear 64 is a gear having a fan-like shape, and includes a plurality of teeth 64A. The teeth 64A of the sector gear 64 mesh with the rack teeth 62A of the ball screw nut 62.

Rotation of the steering wheel 23 is transmitted to the ball screw shaft 61 via the steering shaft 21. As the ball screw shaft 61 rotates, the ball screw nut 62 moves in the axial direction relative to the ball screw shaft 61. Thus, the sector gear 64 swings about the sector shaft 63. When the sector shaft 63 rotates in conjunction with the sector gear 64 swinging, the pitman arm 31 swings about the sector shaft 63.

The fourth gear 54 is linked to the ball screw shaft 61 so as to be integrally rotatable therewith. The fourth gear 54 is situated on the ball screw shaft 61, at a portion between the ball screw nut 62 and the fourth bearing 66, and is disposed at a position close to the third bearing 65. The fourth gear 54 is situated coaxially with the ball screw shaft 61. The fourth gear 54 and the ball screw shaft 61 are rotatable about a third axis O3.

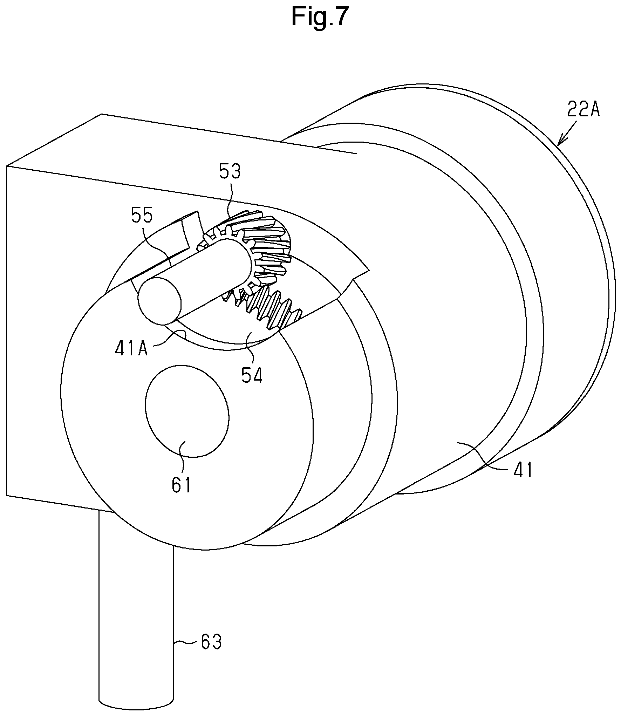

As illustrated in FIG. 7, the first housing 41 includes an opening portion 41A. The opening portion 41A is provided at the second end portion of the first housing 41, by notching out a corner portion in which an end wall in an axial direction and a peripheral wall intersect. A portion of the fourth gear 54 is exposed to outside of the first housing 41 through the opening portion 41A. The fourth gear 54 meshes with the third gear 53 through the opening portion 41A. The third gear 53 and the fourth gear 54 make up a second parallel-axis cylindrical gear pair.

Torque of the motor 22B is transmitted to the ball screw shaft 61 via the first gear 51, the second gear 52, the third gear 53, and the fourth gear 54. Torque in the same direction as the steering direction of the steering wheel 23 is applied to the ball screw shaft 61, thereby assisting the steering of the steering wheel 23. The ball screw shaft 61 corresponds to an input shaft to which rotation is applied from the reducer 22C. The sector shaft 63 corresponds to an output shaft that operates in conjunction with the steered wheels 13.

### <Assembly Method of Steering Actuator 22>

Next, a method for assembling the steering actuator 22 will be described. The steering gearbox 22A, the motor 22B, and the reducer 22C are subassemblies, and are preassembled. A subassembly is an assembly of parts that make up a specific functional portion, and can be handled integrally. Note, however, that the fourth gear 54 is not included in the reducer 22C as a subassembly. The fourth gear 54 is accommodated inside the first housing 41.

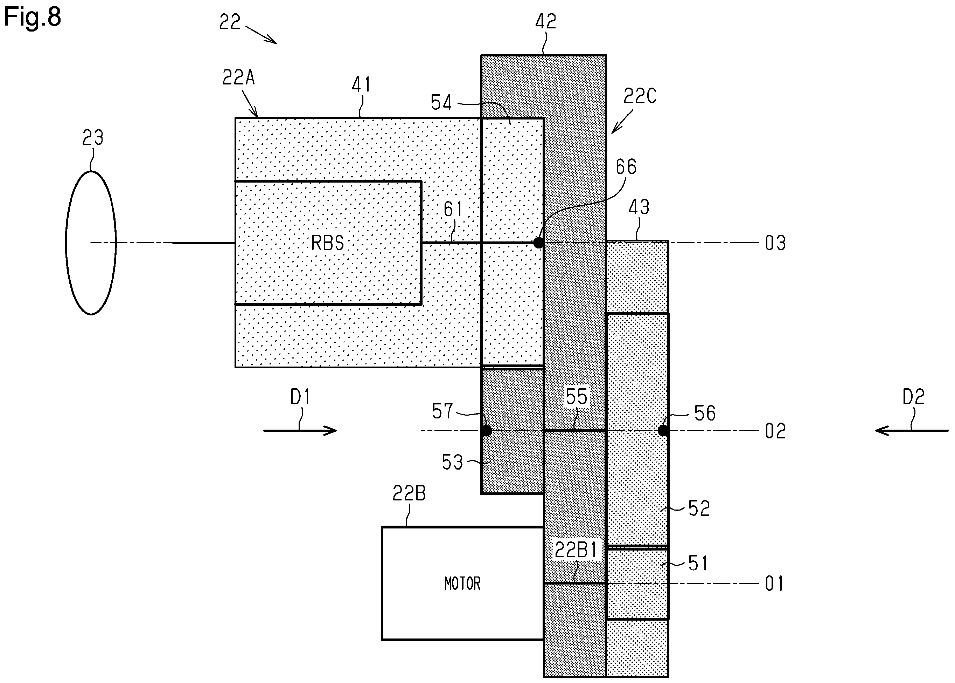

As illustrated in FIG. 8, when assembling the steering actuator 22, first, the steering gearbox 22A is attached to the second housing 42 of the reducer 22C from a first attaching direction D1. The first attaching direction D1 is a direction from the second housing 42 toward the third housing 43 in the axial direction of the fitting portion 42B.

Next, the motor 22B is attached to the second housing 42 from the first attaching direction D1. That is to say, the steering gearbox 22A and the motor 22B are attached to the second housing 42 from the same direction. The steering gearbox 22A and the motor 22B are situated on the opposite side of the second housing 42 from the third housing 43.

This completes the assembly work of the steering actuator 22. After the assembly work is completed, oil is sealed inside the first to third housings 41 to 43. The steering gearbox 22A and the motor 22B are fixed to the second housing 42, thereby defining relative positions of the first axis O1 and the third axis O3. When the relative positions of the first axis O1 and the third axis O3 are determined, relative positions of the first axis O1 and the second axis O2, and relative positions of the third axis O3 and the second axis O2 are also determined. This is because the position of the second axis O2 relative to the second housing 42 is already determined when the reducer 22C is assembled.

The third housing 43 is attached to the second housing 42 in the following state, for example. That is to say, the first end portion of the shaft 55 is rotatably supported by the third housing 43 via the first bearing 56. The second gear 52 is accommodated inside the third housing 43. The second bearing 57 is attached to the second end portion of the shaft 55. In this state, the third housing 43 is attached to the second housing 42 from a second attaching direction D2. The second attaching direction D2 is a direction that is an opposite direction to the first attaching direction D1.

Attaching the third housing 43 to the second housing 42 fits the second bearing 57 into the second bearing support portion 42D of the second housing 42. That is to say, positions of both ends of the shaft 55 are determined by the first bearing 56 and the second bearing 57. Once the positions of both ends of the shaft 55 are determined, the position of the second axis O2 relative to the second housing 42 is determined.

Accordingly, fixing the third housing 43, the steering gearbox 22A, and the motor 22B to the second housing 42 determines all relative positional relations among the first axis O1, the second axis O2, and the third axis O3. The first axis O1, the second axis O2, and the third axis O3 are parallel to one another. The second housing 42 is a member that serves as a reference when assembling the steering actuator 22.

### <Advantages of First Embodiment>

The first embodiment yields the following advantages.
(1-1) In order for the plurality of the gears of the reducer 22C to mesh properly, center-to-center distances among each of the gears are important. The center-to-center distances include the distance between the first axis O1 and the third axis O3. In the present embodiment, the steering gearbox 22A and the motor 22B are fixed to the second housing 42 from the first attaching direction D1, thereby defining the relative positions of the first axis O1 and the third axis O3. The distance between the first axis O1 and the third axis O3 is maintained at an appropriate distance, and accordingly the steering actuator 22 can be operated smoothly. Hence, the electric power steering system 20 can be operated smoothly. NV (Noise and Vibration) performance is also improved.

(1-2) When assembling the reducer 22C, the third housing 43 is fixed to the second housing 42 from the second attaching direction D2, thereby defining the position of the second axis O2 relative to the second housing 42. In this state, the steering gearbox 22A and the motor 22B are fixed to the second housing 42 from the first attaching direction D1, thereby determining all relative positional relations among the first to third axes O1 to O3. That is to say, the distance between the first axis O1 and the second axis O2, the distance between the second axis O2 and the third axis O3, and the distance between the third axis O2 and the first axis O1 are maintained at appropriate distances. Accordingly, the steering actuator 22 can be operated smoothly.

(1-3) In the axial direction of the fitting portion 42B of the second housing 42, the outer peripheral face of the second end portion of the first housing 41 is fitted to the inner peripheral face of the fitting portion 42B. Accordingly, the length of the steering actuator 22 in the axial direction can be shortened as compared to a case in which, for example, the second end portion of the first housing 41 is linked to the distal end of the fitting portion 42B in the axial direction by abutting. The length of the steering actuator 22 in the axial direction is shortened by a length corresponding to the fitting depth of the second end portion of the first housing 41 as to the fitting portion 42B. Also, the length of the shaft 55 in the axial direction can be shortened by a length corresponding to the fitting depth of the second end portion of the first housing 41 as to the fitting portion 42B. This increases the rigidity of the shaft 55. Also, the shaft 55 inclines less readily with respect to the second axis O2. Accordingly, rigidity, strength, durability, and NV performance of the steering actuator 22 are improved.

(1-4) The second gear 52, the third gear 53, and the shaft 55 are integrally rotatable. The second gear 52, the third gear 53, and the shaft 55 are supported spanning the second housing 42 and the third housing 43, via the first bearing 56 and the second bearing 57. The first bearing 56 is fixed to the third housing 43, and the second bearing 57 is fixed to the second housing 42. Fixing the first bearing 56 and the second bearing 57 to different housings facilitates work of aligning the first bearing 56 and the second bearing 57 when assembling the reducer 22C. The work of aligning is work of adjusting positions of the first axis 56 and the second bearing 57 such that the axis of the first bearing 56 and the axis of the second bearing 57 are situated on the same straight line. Performing work of aligning enables misalignment of the gear shaft caused by machining tolerance to be resolved. This is also advantageous with regard to strength, durability, and NV performance.

(1-5) The first bearing 56 is disposed outward from the second gear 52 in the axial direction. To be outward in the axial direction is to be on the opposite side from the third gear 53 with respect to the second gear 52. Unlike a case in which the first bearing 56 is provided between the second gear 52 and the third gear 53 on the shaft 55, the length of the shaft 55 in the axial direction can be shortened, which is advantageous in terms of NV performance. Also, the distance between the second gear 52 and the third gear 53 in the axial direction can be shortened. Accordingly, the lengths of the second housing 42 and the third housing 43 in the axial direction can be shortened. Thus, the size of the steering actuator 22 can be reduced. Also, oil is sealed inside the first to third housings 41 to 43. Accordingly, the amount of oil that is necessary decreases in accordance with the reduction in size of the steering actuator 22, as well. Thus, the weight of the steering actuator 22 can also be reduced.

### <Second Embodiment>

Next, an electric power steering system according to a second embodiment will be described. The present embodiment basically includes the same configuration as that of the first embodiment illustrated in FIG. 1 to FIG. 8. In the present embodiment, a portion of the configuration of the steering actuator 22 is different from that of the first embodiment. Accordingly, members and configurations that are the same as those in the first embodiment will be denoted by the same signs as those therein, and detailed description thereof will be omitted.

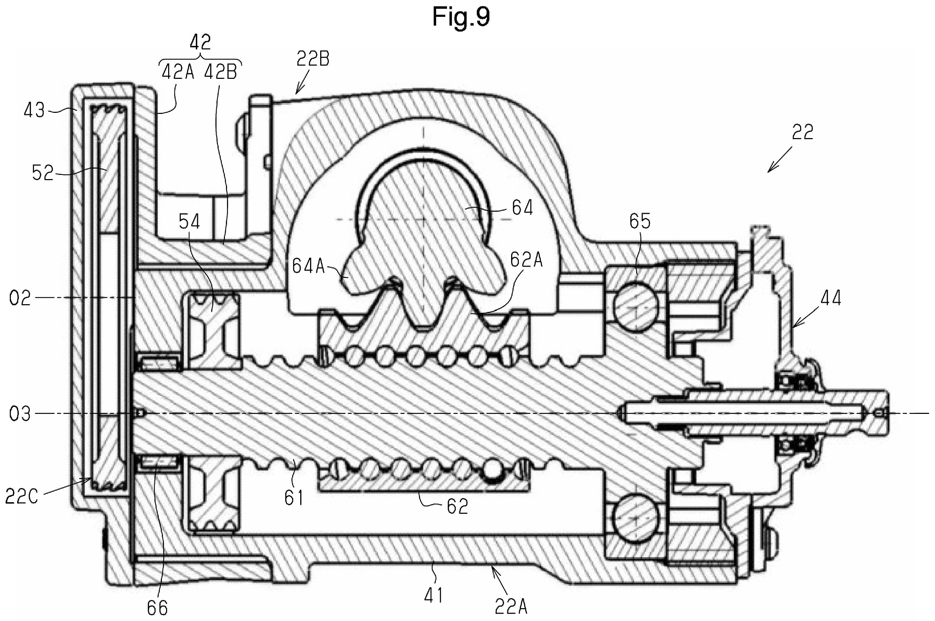

As illustrated in FIG. 9, in the first embodiment described earlier, the fourth gear 54 is accommodated inside the first housing 42. Also, the fourth gear 54 is situated further inward in the axial direction of the ball screw shaft 61 than the fourth bearing 66. Conversely, there are cases in which the position of the fourth gear 54 is changed as follows, depending on product specifications.

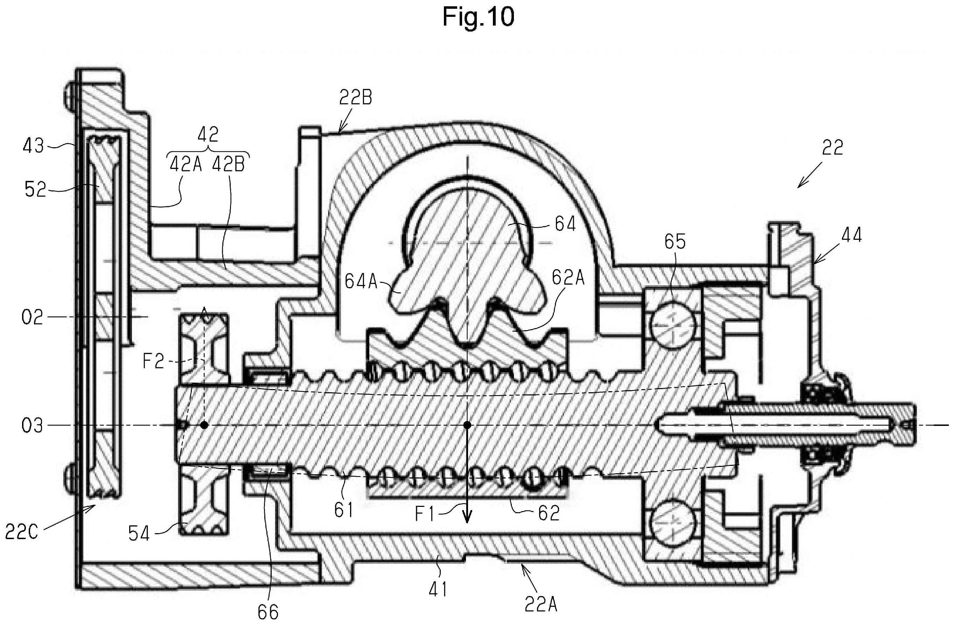

As illustrated in FIG. 10, the fourth gear 54 is disposed outside of the first housing 42. Also, the fourth gear 54 is disposed further outward in the axial direction of the ball screw shaft 61 than the fourth bearing 66. The length of the first housing 42 in the axial direction is shorter than that of the first embodiment, by an amount equivalent to the length of the fourth gear 54 in the axial direction. The fourth gear 54 is accommodated inside the second housing 42. The third gear 53 (omitted from illustration) that meshes with the fourth gear 54 is also accommodated inside the second housing 42.

The second housing 42 includes the base portion 42A and the fitting portion 42B, similar to the first embodiment. However, the shape of the base portion 42A is different from that of the first embodiment. That is to say, the base portion 42A is a box-shaped body including a predetermined profile, and is open at the second end face of the base portion 42A. The second end face is an end face on the opposite side from the first end face, and is an end face that is on a side farther from the first housing 41 in the axial direction of the first housing 41. Inside of the base portion 42A communicates with inside of the fitting portion 42B. The second gear 52 is accommodated inside of the base portion 42A. The first gear 51 (omitted from illustration) that meshes with the second gear 52 is also accommodated inside of the base portion 42A.

The second end portion of the ball screw shaft 61 passes through the first housing 41 in the axial direction and protrudes inside of the fitting portion 42B. The second end portion is an end portion of the ball screw shaft 61 that is opposite to the torque sensor 44. The fourth gear 54 is linked to the second end portion of the ball screw shaft 61, so as to be integrally rotatable therewith, inside of the fitting portion 42B. That is to say, the fourth gear 54 is accommodated inside of the fitting portion 42B. The third gear 53 (omitted from illustration) that meshes with the fourth gear 54 is also accommodated inside of the fitting portion 42B. The length of the fitting portion 42B in the axial direction is longer than the length of the fitting portion 42B in the axial direction in the first embodiment.

The third housing 43 is a plate-like member, and includes a profile corresponding to the profile of the base portion 42A. The third housing 43 covers the second end face of the base portion 42A.

### <Support Structure for Second Gear 52 and Third Gear 53>

Next, a support structure for the second gear 52 and the third gear 53 will be described.

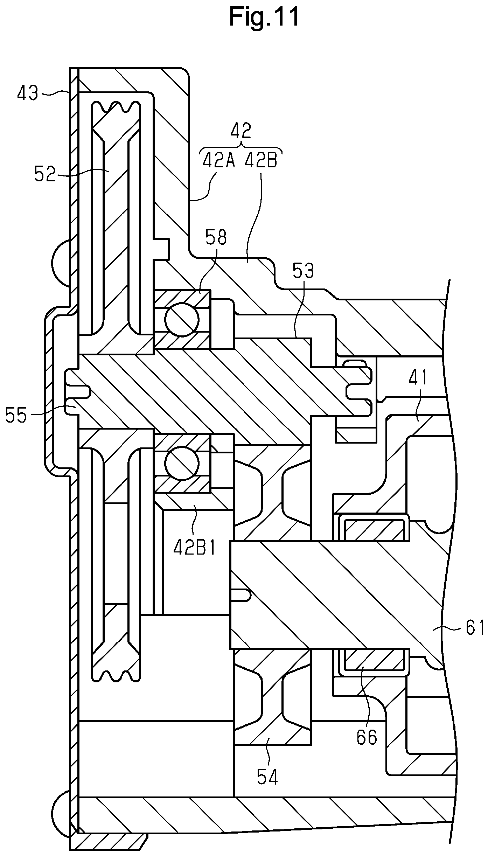

As illustrated in FIG. 11, the second gear 52 and the third gear 53 are linked to the shaft 55, so as to be integrally rotatable therewith. The second gear 52 is disposed towards the first end portion of the shaft 55. The third gear 53 is disposed towards the second end portion of the shaft 55. The third gear 53 may be a separate member from the shaft 55, or may be formed integrally with the shaft 55. A fifth bearing 58 is mounted onto the shaft 55 at a portion between the second gear 52 and the third gear 53. In the present embodiment, the first bearing 56 and the second bearing 57 (see FIG. 5) of the first embodiment are omitted.

A third bearing support portion 42B1 is provided inside of the fitting portion 42B. The third bearing support portion 42B1 is a tubular portion of the fitting portion 42B that has a circular cross-sectional form. An outer peripheral face of the fifth bearing 58 is fitted into an inner peripheral face of the third bearing support portion 42B1. The shaft 55 is rotatably supported by the fitting portion 42B, and hence by the second housing 42, via the fifth bearing 58. The third gear 53 meshes with the fourth gear 54 inside the fitting portion 42B.

### <Regarding Deflection of Ball Screw Shaft 61>

However, there is the following concern with the steering actuator 22 configured in this way. That is to say, there is a concern that disposing the fourth gear 54 outside of the first housing 42, as illustrated in FIG. 10, may result in the ball screw shaft 61 being more prone to exhibit deflection than that in the first embodiment. The direction of deflection of the ball screw shaft 61 is a direction intersecting the axial direction of the ball screw shaft 61. When the ball screw shaft 61 exhibits deflection, the fourth gear 54 becomes displaced. There is concern that, depending on the direction of displacement of the fourth gear 54, the meshing state between the fourth gear 54 and the third gear 53 may be affected.

For example, a situation is conceivable in which a first load F1 from the sector gear 64 is applied to the ball screw shaft 61 via the ball screw nut 62. The first load F1 is, for example, a force in a direction orthogonal to the axial direction of the ball screw shaft 61. When subjected to the first load F1, the ball screw shaft 61 exhibits deflection in the same direction as the direction of the first load F1, i.e., in a direction away from the sector gear 64.

When the ball screw shaft 61 exhibits deflection, the middle portion of the ball screw shaft 61 in the axial direction is slightly displaced in the same direction as the first load F1, with the third bearing 65 and the fourth bearing 66 as fulcrums. Also, both end portions of the ball screw shaft 61 are slightly displaced in the direction opposite to the direction of the first load F1, with the third bearing 65 and the fourth bearing 66 as fulcrums. A second load F2 is placed on the fourth gear 54 due to the slight displacement of both end portions of the ball screw shaft 61. The second load F2 is a force in a direction opposite to the first load F1. The fourth gear 54 is subjected to the second load F2, and is displaced in the same direction as the second load F2.

Depending on the direction of the second load F2, there is concern that the fourth gear 54 may be displaced in a direction away from the third gear 53, for example. In this case, clearance between the teeth of the fourth gear 54 and the teeth of the second gear 53 widens. This is a contributing factor to abnormal noise being generated. Accordingly, in the present embodiment, the position of disposing the third gear 53 is determined by taking into consideration the direction of deflection the ball screw shaft 61.

### <Position of Disposing Third Gear 53>

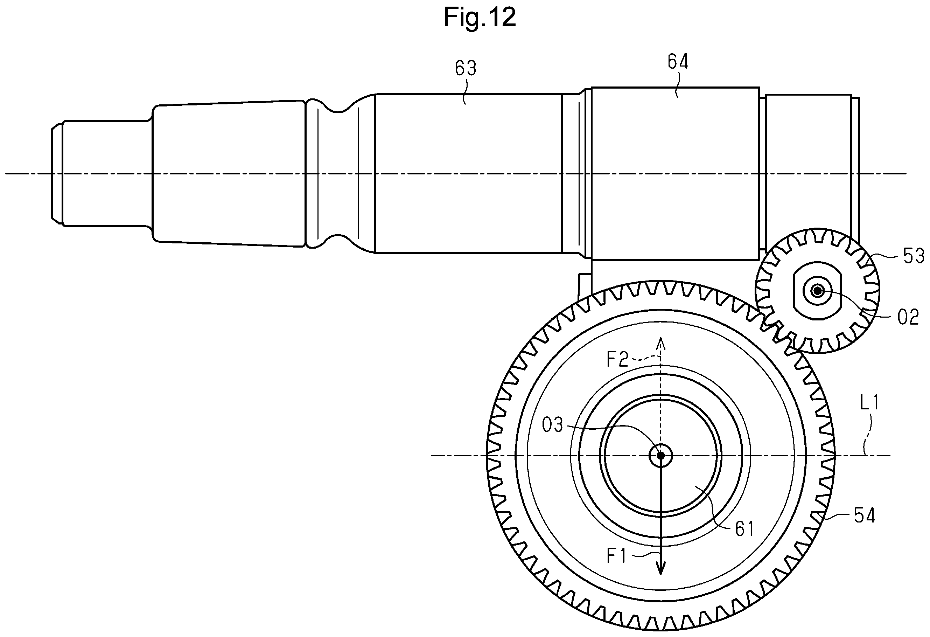

Next, the position of disposing the third gear 53 will be described. As illustrated in FIG. 12, when viewed from the axial direction of the fourth gear 54, the third gear 53 is disposed in a region on the opposite side from the direction of the first load F1 with respect to a straight line L1 that passes through the center of the fourth gear 54 and that is orthogonal to the direction of the first load F1. When viewed in the axial direction of the fourth gear 54, the center of the fourth gear 54 agrees with the third axis O3. The direction of the first load F1 is also the direction in which the ball screw shaft 61 exhibits deflection.

As described above, when the first load F1 is applied to the ball screw shaft 61 and the ball screw shaft 61 exhibits deflection, the fourth gear 54 is subjected to the second load F2 and is displaced in the same direction as the second load F2. In contrast, the third gear 53 is disposed in the region that is opposite to the direction of the first load F1 with respect to the straight line L1. That is to say, the third gear 53 is situated in the region that is on the same side of the straight line L1 as the direction in which the fourth gear 54 is displaced.

Accordingly, when the fourth gear 54 is displaced in the same direction as the second load F2, the fourth gear 54 approaches the third gear 53, thereby narrowing the clearance between the teeth of the fourth gear 54 and the teeth of the second gear 53. Thus, the meshing state of the fourth gear 54 and the third gear 53 is maintained in an appropriate state. Also, generation of abnormal noise is suppressed.

Incidentally, when viewed from the axial direction of the fourth gear 54, the third gear 53 may be provided at any position as long as the center of the third gear 53 is situated in the region opposite from direction of the first load F1 with respect to the straight line L1, and within a region from "0°" to "180°" with respect to the straight line L1. When viewed in the axial direction of the fourth gear 54, the center of the third gear 53 agrees with the second axis O2.

For example, when viewed from the axial direction of the fourth gear 54, the center of the third gear 53 may be situated on the straight line L1. In this case, a portion of the third gear 53 may extend beyond the straight line L1 and stick out into the region on the same side as the direction of the first load F1. However, even in this case, when the fourth gear 54 is displaced in the same direction as the second load F2, an advantage is yielded in which the clearance between the teeth of the fourth gear 54 and the teeth of the second gear 53 is narrowed.

Note that the present embodiment may be applied to the first embodiment described earlier. There is a concern in the first embodiment as well, in that when the first load F1 from the sector gear 64 is applied to the ball screw shaft 61 via the ball screw nut 62, the ball screw shaft 61 may exhibit deflection in the same direction as the first load F1.

### <Effects of Second Embodiment>

The second embodiment yields the following advantages.
(2-1) When viewed from the axial direction of the fourth gear 54, the third gear 53 is disposed such that the center of the third gear 53 is situated in the region that is on the opposite side from the direction of the first load F1 with respect to the straight line L1, and within the region from "0°" to "180°" with respect to the straight line L1. Accordingly, deflection of the ball screw shaft 61 can be suppressed from affecting the meshing state of the teeth of the fourth gear 54 and the teeth of the third gear 53.

(2-2) The fourth gear 54 is provided outside of the first housing 41. The fourth gear 54 meshes with the third gear 53 inside the second housing 42. Accordingly, there is no need to provide the opening portion 41A (see FIG. 7) in the first housing 41 for exposing the fourth gear 54, as in the case of the first embodiment. Thus, the configuration of the first housing 41 can be simplified.

(2-3) The second housing 42 rotatably supports the second gear 52. The second gear 532 is supported by the second housing 42, thereby defining the position of the second axis O2 relative to the second housing 42. The steering gearbox 22A and the motor 22B are fixed to the second housing 42 in this state, whereby all of the relative positional relations among the first to third axes O1 to O3 are determined. That is to say, the distance between the first axis O1 and the second axis O2, the distance between the second axis O2 and the third axis O3, and the distance between the third axis O2 and the first axis O1 are maintained at appropriate distances. Accordingly, the steering actuator 22 can be operated smoothly.

### <Other Embodiments>

The first and second embodiments may be carried out modified as follows.
- The first to fourth gears 51 to 54 may each be a spur gear.
- A second end portion of the steering gearbox 22A may be configured to fit onto an outer peripheral face of the fitting portion 42B. It is sufficient for there to be a fitting relation between the second end portion of the steering gearbox 22A and the fitting portion 42B, in the axial direction of the fitting portion 42B. Note, however, that a profile of an inner peripheral face of the second end portion of the steering gearbox 22A is configured to agree with a profile of the outer peripheral face of the fitting portion 42B. The same advantages as in (3) described earlier can be obtained in this way as well.
- The method of assembling the reducer 22C can be modified as appropriate. For example, the third housing 43 is attached to the second housing 42 in a state in which the shaft 55 is rotatably supported by the second housing 42 via the second bearing 57.
- The term "tubular" as used in the present specification may refer to any structure including a peripheral wall. The term "tubular" may refer to any structure having a cross-sectional form that is, for example, circular, elliptical, or polygonal with sharp or rounded corners, but is not limited thereto.
- The expression "at least a portion of A" as used in the present specification means "a portion of A, or all of A". Also, the expression "at least B from between A and B" as used in the present specification means "only B, or both A and B".
- The electric power steering system described in the present specification can be applied to a steering device of a steer-by-wire steering system in which the steering device and a turning device are not mechanically linked. The steering device is the portion of the steering system that includes the steering shaft 21. The turning device is the portion of the steering system that includes the steering actuator 22. In this case, the motor 22B functions as a turning motor that generates a turning force. The turning force is force for steering the steered wheels 13.

## Claims

1. An electric power steering system comprising:
a motor that includes a motor shaft;
a reducer that is configured to reduce speed of rotation of the motor; and
a steering gearbox that includes an input shaft to which rotation is applied from the reducer and an output shaft that is configured to operate in conjunction with steered wheels of a vehicle, the steering gearbox being configured to convert rotation of the input shaft into rotation of the output shaft, wherein
the steering gearbox includes a first housing that extends in an axial direction of the input shaft and that accommodates at least a portion of the input shaft,
the reducer includes
a first parallel-axis cylindrical gear pair that includes a first gear and a second gear that mesh with each other,
a second parallel-axis cylindrical gear pair that includes a third gear and a fourth gear that mesh with each other,
a second housing that is linked to an end portion of the first housing in an axial direction, and that accommodates at least the fourth gear from between the second parallel-axis cylindrical gear pair, and
a third housing that is linked to the second housing on an opposite side from the first housing in the axial direction of the input shaft, and that is configured to cover the first parallel-axis cylindrical gear pair,
the first gear is linked to the motor shaft, and is configured to rotate about a first axis,
the second gear and the third gear are coaxially linked, and are configured to rotate about a second axis,
the fourth gear is linked to an end portion of the input shaft in the axial direction, and is configured to rotate about a third axis, and
relative positions of the first axis and the third axis are configured to be defined by attaching the motor and the first housing to the second housing from a same attaching direction in the axial direction of the input shaft.

2. The electric power steering system according to claim 1, wherein:
the third housing is configured to rotatably support the second gear; and
relative positions of the first axis, the second axis, and the third axis are configured to be defined by attaching the third housing to the second housing from a direction opposite to the attaching direction of the motor and the first housing.

3. The electric power steering system according to claim 1, wherein:
the second housing is configured to rotatably support the second gear; and
relative positions of the first axis, the second axis, and the third axis are configured to be defined by attaching the motor and the first housing to the second housing.

4. The electric power steering system according to any one of claims 1 to 3, wherein:
the second housing includes a fitting portion that is tubular; and
the fitting portion and the end portion of the first housing in the axial direction are

5. The electric power steering system according to claim 4, wherein an outer peripheral face of the end portion of the first housing in the axial direction is fitted into an inner peripheral face of the fitting portion.

6. The electric power steering system according to claim 1 or 2, wherein:
the reducer includes a shaft including a first end portion and a second end portion;
the second gear is linked to a portion of the shaft toward the first end portion so as to be integrally rotatable with the shaft;
the third gear is linked to a portion of the shaft toward the second end portion so as to be integrally rotatable with the shaft;
the third housing includes a first bearing that is configured to rotatably support the first end portion of the shaft;
the second housing includes a second bearing that is configured to rotatably support the second end portion of the shaft; and
the second gear, the third gear, and the shaft are supported spanning the second housing and the third housing, via the first bearing and the second bearing.

7. The electric power steering system according to any one of claims 1 to 3, wherein:
the steering gearbox is a recirculating ball screw type steering gearbox that includes
a ball screw shaft that is rotatably supported inside the first housing, and that is also subjected to rotation by the reducer,
a ball screw nut that is screwed onto the ball screw shaft, and that also includes a plurality of rack teeth on an outer peripheral face of the ball screw nut that is disposed along an axial direction of the ball screw shaft,
a sector shaft that is configured to operate in conjunction with the steered wheels, and
a sector gear that is linked to the sector shaft so as to be integrally rotatable, and that also meshes with the rack teeth and swings about the sector shaft as a center in accordance with movement of the ball screw nut in an axial direction; and
the ball screw shaft corresponds to the input shaft, and the sector shaft corresponds to the output shaft.

8. The electric power steering system according to claim 7, wherein:
the ball screw shaft is configured such that a load from the sector gear acts on the ball screw shaft via the ball screw nut; and
when viewed from an axial direction of the fourth gear, the third gear is disposed such that a center of the third gear is situated in a region on an opposite side of a load direction with respect to a straight line that passes through a center of the fourth gear and is orthogonal to the load direction, within a region from 0° to 180° with respect to the straight line.
